# FASCICULE DE BREVET EUROPEEN

(11) **EP 3 231 023 B1**
(45) Date de publication et mention de la délivrance du brevet: **01.04.2020**
(21) Numéro de dépôt: 15816820.3
(22) Date de dépôt: 08.12.2015
(51) Int. Cl.: H01M 2/16, H01M 2/18, H01M 4/139, H01M 4/60, H01M 10/052, H01M 10/0569

(54) **BATTERIE LITHIUM ORGANIQUE**
ORGANISCHE LITHIUMBATTERIE
ORGANIC LITHIUM BATTERY

(30) Priorité: 10.12.2014 FR 1462165
(43) Date de publication de la demande: 18.10.2017
(73) Titulaire: Blue Solutions, 29500 Ergué Gabéric (FR); Centre National de la Recherche Scientifique, 75016 Paris (FR); Universite de Nantes, 44000 Nantes (FR)
(72) Inventeur: LECUYER, Margaud, 29760 Penmarc'h (FR); DESCHAMPS, Marc, 29000 Quimper (FR); GAUBICHER, Joël, 44000 Nantes (FR); POIZOT, Philippe, 80000 Amiens (FR); GUYOMARD, Dominique, 44880 Sautron (FR); LESTRIEZ, Bernard, 44000 Nantes (FR)
(74) Mandataire: Goulard, Sophie
(86) Numéro de dépôt international: PCT/FR2015/053371
(87) Numéro de publication internationale: WO 2016/092199

(56) Documents cités:
- EP-A1- 1 950 821
- EP-A1- 2 546 907
- EP-A2- 0 492 942
- US-A1- 2014 272 603
- YANLIANG LIANG AND AL: "Organic electrode materials for rechargeable lithium batteries", ADVANCED ENERGY MATERIALS, vol. 2, 21 mai 2012 (2012-05-21), pages 742-769, XP002742883, DOI: 10.1002/aenm.201100795
- LÉCUYER MARGAUD ET AL: "A rechargeable lithium/quinone battery using a commercial polymer electrolyte", ELECTROCHEMISTRY COMMUNICATIONS, vol. 55, 19 mars 2015 (2015-03-19), pages 22-25, XP029155752, ISSN: 1388-2481, DOI: 10.1016/J.ELECOM.2015.03.010

## Description

La présente invention se rapporte au domaine des batteries lithium organique de hautes densités d'énergie et de puissance. En particulier, la présente invention concerne une batterie lithium organique comprenant une électrode positive à base de composés organiques rédox et un séparateur poreux en polypropylène orienté biaxialement, et son procédé de fabrication.

Les batteries au lithium sont devenues des constituants indispensables dans de nombreux dispositifs qui comprennent des appareils portables, tels que notamment les téléphones mobiles, les ordinateurs et l'outillage léger, ou des appareils plus lourds tels que des moyens de transports à deux roues (bicyclettes, cyclomoteurs) ou à quatre roues (véhicules automobiles électriques ou hybrides). Elles sont également largement étudiées pour une utilisation dans le domaine du stockage stationnaire d'énergie.

Une batterie au lithium métal comprend au moins une électrode négative et au moins une électrode positive entre lesquelles est placé un séparateur imprégné par un électrolyte liquide ou un électrolyte polymère solide assurant par lui-même à la fois la séparation physique des électrodes et le transport des ions lithium. L'électrode négative est constituée d'une feuille de lithium métallique ou d'un alliage de lithium, éventuellement supportée par un collecteur de courant ; et l'électrode positive est constituée par un collecteur de courant supportant un matériau d'électrode contenant au moins une matière active d'électrode positive capable d'insérer des ions lithium de manière réversible, éventuellement un polymère qui joue le rôle de liant (e.g. poly(fluorure de vinylidène) ou PVdF) et/ou éventuellement un agent générant une conductivité électronique (e.g. noir de carbone). L'électrolyte liquide est par exemple constitué d'un sel de lithium (e.g. LiBF₄, LiClO₄, LiPF₆, etc...) en solution dans un solvant choisi pour optimiser le transport et la dissociation des ions. Les solvants d'électrolyte conventionnels (e.g. carbonate de propylène, γ-butyrolactone, sulfolane, diméthoxyéthane, tétrahydrofurane, 1,3-dioxolane, etc...) sont saturés dans des conditions normales à environ 1-1,5 mol/l de sel de lithium. Le séparateur doit, quant à lui, assurer une parfaite isolation entre les deux électrodes pour éviter tout risque de court-circuit, et avoir :
- une résistance mécanique appropriée, pour supporter les contraintes dues aux variations de volume des matières actives pendant les cycles de charge et de décharge,
- une résistance chimique suffisante pour assurer sa tenue dans le temps puisqu'il est immergé dans une solution très corrosive (i.e. électrolyte), et
- une structure poreuse appropriée, pour permettre la diffusion des anions et cations de l'électrolyte, et éviter tout transport de matière active d'une électrode sur l'autre.

Le séparateur est généralement en un matériau poreux non conducteur électronique, par exemple en un matériau polymère à base de polyoléfines (e.g. polyéthylène) ou en fibres (e.g. fibres de verre ou fibres de bois).

Au cours du fonctionnement de la batterie, des ions lithium passent de l'une à l'autre des électrodes à travers l'électrolyte. Lors de la décharge de la batterie, une quantité de lithium réagit avec la matière active d'électrode positive à partir de l'électrolyte, et une quantité équivalente est introduite dans l'électrolyte à partir de la matière active de l'électrode négative, la concentration en lithium restant ainsi constante dans l'électrolyte. L'insertion du lithium dans l'électrode positive est compensée par apport d'électrons à partir de l'électrode négative *via* un circuit extérieur. Lors de la charge, les phénomènes inverses ont lieu.

Les divers constituants d'une batterie au lithium sont choisis de manière à produire, au coût le plus faible possible, des batteries qui ont une densité d'énergie élevée, une bonne stabilité au cyclage et qui fonctionnent avec sécurité.

Pour des raisons historiques mais aussi de performances électrochimiques, les technologies actuellement commercialisées reposent sur l'usage quasi-exclusif de matériaux d'électrode inorganiques, principalement à base des métaux de transition tels que Co, Mn, Ni ou Fe. Toutefois, ces matériaux d'électrode inorganiques (e.g. LiCoO₂, LiMnO₄, LiFePO₄, LiNi_{0,8}Co_{0,15}Al_{0,05}O₂, LiNi_{1/3}Mn_{1/3}Co_{1/3}O₂, LiNi_{0,5}Mn_{1,5}O₄, etc...) présentent de nombreux inconvénients tels que le risque d'explosion de la batterie, leur toxicité élevée, leur difficulté de recyclage, leur coût élevé et/ou leur faible capacité spécifique. En outre, ces matériaux inorganiques sont généralement élaborés à partir de ressources d'origine géologique (i.e. non renouvelables) et énergivores dans leur procédé. Compte tenu des volumes de production de batteries annoncés (plusieurs milliards d'unités par an pour la technologie Li-ion), ces matériaux d'électrode inorganiques risquent de ne plus être disponibles en grande quantité à terme. Par ailleurs, aucune des technologies existantes ne répond parfaitement aux besoins tandis que de nouvelles normes apparaissent au niveau européen sur le plan environnemental (voir http://ec.europa.eu/environment/waste/batteries/, directive 2006/66/EC).

Dans ce contexte, le développement de batteries lithium organique comprenant comme matière active d'électrode positive une structure organique rédox (e.g. dérivés de nitroxydes, composés polyaromatiques), c'est-à-dire une structure organique capable de mettre en œuvre une ou plusieurs réactions d'oxydoréductions réversibles, notamment en échangeant des électrons avec une électrode et simultanément en s'associant avec des ions lithium, laisse entrevoir certaines potentialités. Tout d'abord, ces structures organiques rédox présentent l'avantage de comprendre des éléments chimiques (C, H, N, O, S, en particulier) pouvant potentiellement dériver de ressources renouvelables, les rendant ainsi plus abondants. Ensuite, elles se détruisent assez facilement par simple combustion à température relativement modérée. En outre, leurs propriétés électrochimiques (propriétés de conduction ionique et électronique, valeur du potentiel d'oxydation, capacité spécifique) peuvent être modulées par une fonctionnalisation adaptée (e.g. intégration de groupements attracteurs proches du centre rédox). Enfin, les structures organiques rédox ont généralement une densité relative de l'ordre de 1 g/cm³, elles sont donc plus légères que les matériaux d'électrode inorganiques, et conduisent par conséquent à des batteries au lithium présentant un poids réduit.

Les études menées sur les batteries lithium organique depuis le début des années 80 ont été exclusivement centrées sur la recherche de nouvelles structures organiques rédox et ont montré que les propriétés fondamentales requises pour qu'une structure organique rédox puisse être mise en œuvre comme matière active d'électrode positive sont l'électroactivité, la réversibilité et une quasi insolubilité dans l'électrolyte.

À titre d'exemple, des polymères conducteurs π-conjugués tels que le polypyrrole, le polythiophène, la polyaniline, le polyacétylène ou le polyacryloxy(TEMPO) (avec TEMPO : 2,2,6,6-tétraméthyl pipéridine-1-N-oxyle) ont été utilisés dans des batteries au lithium comme matériau d'électrode positive. Toutefois, ces structures organiques rédox présentent généralement des capacités spécifiques faibles de l'ordre de 100 mAh/g, notamment en raison du fait qu'elles ne permettent pas d'échanger plus de 0,5 électron par monomère au cours des réactions d'oxydoréductions.

L'utilisation de dérivés de la quinone comme matière active d'électrode positive, une quinone se caractérisant généralement par deux fonctions carbonylées présentes sur un noyau aromatique, a également suscité un intérêt croissant. À titre d'exemple, la 1,4-benzoquinone et la 9,10-phénanthrènequinone (qui présentent deux fonctions carbonylées) ont respectivement des capacités spécifiques théoriques élevées de l'ordre de 500 mAh/g et 256 mAh/g. En outre, elles peuvent subir théoriquement une réaction d'oxydoréduction à deux électrons. En particulier, JPS5686466 décrit une batterie lithium organique comprenant une électrode négative constituée de lithium métal ; une électrode positive comprenant de la 9,10-phénanthrènequinone comme matière active ; un électrolyte liquide constitué par du LiClO₄ en solution dans du carbonate de propylène ; et un séparateur imprégné dudit électrolyte liquide. La batterie présente une bonne stabilité en ce qui concerne sa capacité de décharge. Toutefois, la réversibilité des réactions d'oxydoréduction est insuffisante et la tension de décharge moyenne est relativement faible (i.e. de l'ordre de 2-2,5 volts). Des résultats similaires ont été obtenus avec l'anthraquinone.

Ainsi, il a été proposé des quinones comprenant un plus grand nombre de fonctions carbonylées (e.g. trois ou quatre fonctions carbonylées) afin d'améliorer les performances électrochimiques des batteries lithium organique. Par exemple, Yao et al. [Int. J. of Electrochem. Sci., 2011, 6, 2905] ont décrit une batterie lithium organique comprenant une électrode négative constituée d'une feuille de lithium métal ; une électrode positive constituée par un collecteur de courant en aluminium supportant un matériau d'électrode comprenant de la 5,7,12,14-pentacènetétrone (PT) comme matière active, du noir d'acétylène comme agent générant une conductivité électronique et du polytétrafluoroéthylène comme liant ; un électrolyte liquide constitué par du bis(trifluorométhanesulfonyl) imide de lithium (LiTFSI) en solution à 1 mol/l dans de la γ-butyrolactone ; et un séparateur en fibres de verre imprégné dudit électrolyte liquide. Toutefois, la résistance au cyclage d'une telle batterie reste faible puisque la capacité spécifique initiale est de l'ordre de 300 mAh/g et chute à 170 mAh/g après 10 cycles. Cette mauvaise stabilité au cyclage est principalement liée à la solubilité de la matière active d'électrode positive (PT) dans le solvant de l'électrolyte liquide (cf. γ-butyrolactone). En effet, la plupart des structures organiques rédox de faible masse molaire (i.e. masse molaire inférieure à 3000 g/mol) sont solubles dans le solvant de l'électrolyte liquide. Aussi, lorsqu'une structure organique rédox est utilisée comme matière active d'électrode, la conductivité électronique entre le collecteur de courant et ladite matière active devient insuffisante et la réactivité est réduite. En outre, la concentration de matière active pouvant être engagée dans une réaction d'oxydoréduction est diminuée, ce qui induit une chute de la capacité de la batterie.

D'autres structures organiques rédox à base d'indolin-3-one telles que le colorant Indigo, également appelé Indigotine ou 2-(1,3-dihydro-3-oxo-2*H-*indole-2-ylidène)-1,2-dihydro-3*H*-indole-3-one, ont également été proposées. En particulier, Yao et al. [Chem. Letters, 2010, 39, 950] ont décrit une batterie lithium organique comprenant une électrode négative constituée d'une feuille de lithium métal ; une électrode positive constituée par un collecteur de courant en aluminium supportant un matériau d'électrode comprenant de l'Indigotine comme matière active, du noir d'acétylène comme agent générant une conductivité électronique et du polytétrafluoroéthylène comme liant ; un électrolyte liquide constitué par de l'hexafluorophosphate de lithium (LiPF₆) en solution à 1 mol/l dans un mélange de carbonate de propylène et de carbonate de diéthyle ; et un séparateur imprégné dudit électrolyte liquide. Là encore, la capacité spécifique chute de 200 mAh/g à 20 mAh/g après une dizaine de cycles, révélant une mauvaise stabilité au cyclage.

Afin d'éviter la dissolution de la matière active dans l'électrolyte, la demande de brevet EP 2546907 A1 décrit la fabrication d'une batterie lithium organique comprenant une électrode négative constituée d'une feuille de lithium métal ; une électrode positive constituée par un collecteur de courant en aluminium supportant un matériau d'électrode comprenant une structure organique rédox de type pyrène-4,5,9,10-tétraone répondant à la formule (1) suivante : 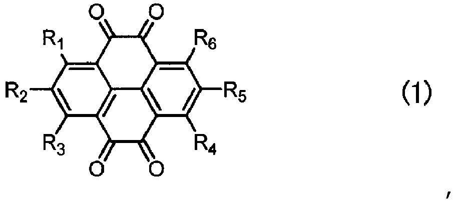 du noir d'acétylène comme agent générant une conductivité électronique et du polytétrafluoroéthylène comme liant ; un électrolyte liquide constitué par de l'hexafluorophosphate de lithium (LiPF₆) en solution à 1 mol/l dans un mélange de carbonate d'éthylène et de carbonate de méthyle et d'éthyle ; et un séparateur poreux en polyéthylène imprégné dudit électrolyte liquide. Les performances de la batterie lithium organique sont améliorées en termes de résistance au cyclage et de tension de décharge moyenne. Cependant, la préparation de la structure organique rédox répondant à la formule (1) est complexe (i.e. elle comprend un grand nombre d'étapes) et longue.

En parallèle, la demande de brevet EP0492942A2 décrit la fabrication d'un film poreux orienté biaxialement à base de polypropylène et de polyéthylène et son utilisation dans un grand nombre d'applications telles que les filtres, les séparateurs de cellules électrochimiques, les membranes d'osmose inverse, les membranes d'étanchéité, les revêtements pour des équipements automobiles, les draps chirurgicaux et les vêtements de protection pour une utilisation dans les hôpitaux et dans les salles blanches électroniques, etc.... Toutefois, ledit film poreux orienté biaxialement en matériau polymère n'est pas optimisé pour être utilisé spécifiquement dans une batterie lithium organique. En effet, les séparateurs sont fonction des performances recherchées pour une application donnée. Ainsi, le film poreux tel que décrit ne permet pas de garantir une stabilité électrochimique et une tenue mécanique suffisantes (e.g. taille des pores supérieure à 5 µm), et une capacité de décharge stable sur plusieurs cycles. En effet, la taille des pores pouvant atteindre des valeurs de l'ordre de 20 µm environ, un tel séparateur laisse présager la diffusion des structures organiques rédox, mais également l'apparition de court-circuits, à moins qu'il ne présente une épaisseur très importante, conduisant alors à un abaissement important de la densité d'énergie volumique de la batterie envisagée. En outre, il n'est pas précisé avec quels types de solvants ledit séparateur est compatible.

Le brevet EP1950821 décrit l'utilisation d'un séparateur poreux comprenant du polypropylène et orienté biaxialement dans une batterie au lithium

Ainsi, le but de la présente invention est de pallier les inconvénients de l'art antérieur précité et de fournir une batterie lithium organique économique, qui met en œuvre des matières premières peu coûteuses, recyclables et non toxiques, et présentant de bonnes performances électrochimiques notamment en termes de résistance au cyclage.

Ces buts sont atteints par l'invention qui va être décrite ci-après.

L'invention a donc pour premier objet une batterie lithium organique selon la revendication 1 et comprenant :
- une électrode négative comprenant du lithium métal ou un alliage de lithium métal,
- une électrode positive éventuellement supportée par un collecteur de courant, ladite électrode positive comprenant au moins une structure organique rédox, au moins un liant polymère P₁ et au moins un agent générant une conductivité électronique, ladite structure organique rédox étant différente des agents soufrés choisis parmi le soufre élémentaire S₈ et les composés organiques soufrés comprenant au moins une liaison S-S, et
- un séparateur poreux imprégné d'un électrolyte,
ladite batterie lithium organique étant caractérisée en ce que le séparateur poreux est un séparateur orienté biaxialement comprenant au moins du polypropylène et l'électrolyte comprend au moins un polyéther linéaire ou cyclique liquide de faible masse molaire et au moins un sel de lithium L₁.

Les inventeurs de la présente demande ont ainsi découvert que l'utilisation d'un séparateur orienté biaxialement comprenant au moins du polypropylène associée à la présence d'un polyéther linéaire ou cyclique liquide de faible masse moléculaire dans l'électrolyte de la batterie lithium organique permet d'améliorer significativement les performances électrochimiques de ladite batterie, notamment en termes de stabilité de la capacité spécifique pendant la décharge sur un grand nombre de cycles et d'optimiser le transport des ions lithium.

Le séparateur orienté biaxialement utilisé dans la batterie lithium organique de l'invention permet également d'assurer la séparation électrique des électrodes, tout en évitant ou limitant la diffusion de la structure organique rédox de l'électrode positive dans la batterie. En outre, le séparateur est stable vis-à-vis de l'électrolyte de la batterie, que ledit électrolyte soit sous forme liquide ou solide (e.g. électrolyte polymère gélifié).

En outre, la batterie lithium organique de l'invention présente l'avantage de pouvoir être mise en œuvre avec diverses structures organiques rédox sans toutefois devoir modifier leurs structures, notamment par ajout de nouveaux groupes fonctionnels.

Dans la présente invention, « un polyéther linéaire ou cyclique liquide de faible masse molaire » signifie un polyéther linéaire ou cyclique liquide de masse molaire inférieure ou égale à 10 000 g·mol⁻¹ environ, de préférence inférieure ou égale à 2000 g·mol⁻¹ environ, et de préférence encore inférieure ou égale à 600 g·mol⁻¹ environ.

Dans un mode de réalisation particulier de l'invention, le séparateur présente une épaisseur allant de 5 µm à 50 µm environ, de préférence de 10 µm à 40 µm environ, et de préférence encore de 10 µm à 30 µm environ.

En effet, le séparateur ne doit pas être trop fin, afin de présenter une bonne tenue mécanique et électrochimique pendant le cyclage, d'éviter les court-circuits, et d'accueillir une quantité d'électrolyte suffisante. Cependant, il ne doit pas être trop épais, sous peine de pénaliser la batterie en termes de densités d'énergie massique et volumique (effet de masse) et en termes de performances à haut régime ou à basse température (effet de polarisation).

Selon une forme de réalisation préférée de l'invention, le séparateur poreux présente une porosité supérieure ou égale à 50% en volume environ, de préférence supérieure ou égale à 55% en volume environ, et de préférence encore supérieure ou égale à 60% en volume environ.

Dans un mode de réalisation particulier, le séparateur poreux présente des pores de taille moyenne allant de 50 nm à 3 µm environ, de préférence de 50 nm à 1 µm environ, et de préférence encore de 100 nm à 500 nm environ.

Grâce à cette porosité, ledit séparateur peut être imprégné facilement par l'électrolyte tout en garantissant une tenue mécanique suffisante.

En effet, le séparateur poreux de l'invention présente une résistance à la perforation (bien connue sous l'anglicisme « *puncture strength* ») d'au moins 30 Newton environ, et de préférence d'au moins 40 Newton environ.

En outre, le séparateur poreux de l'invention présente un allongement à la rupture d'au moins 5 mm environ, et de préférence d'au moins 10 mm environ. Cet allongement est mesuré lors de tests de perforation à l'aide d'un poinçon métallique, à température ambiante.

Le séparateur poreux peut présenter une porosité de type Gurley allant de 50 à 500 s/100 cm³ environ, et de préférence allant de 50 à 400 s/100 cm³ environ. La porosité de type Gurley P_{Gurley} indique le temps mis (en seconde) pour que 100 cm³ d'air traversent 1 pouce-carré de séparateur. La porosité de type Gurley P_{Gurley} traduit la perméabilité d'un séparateur : plus la valeur P_{Gurley} est faible, plus les échanges à travers celui-ci sont favorisés et ainsi, plus la diffusion des espèces est facilitée.

Le séparateur poreux peut présenter un retrait thermique dans le sens longitudinal (i.e. retrait longitudinal) et/ou un retrait thermique dans le sens transversal (i.e. retrait transversal) strictement inférieur à 15% environ, et de préférence strictement inférieur à 10% environ, quelle que soit son épaisseur (le retrait est mesuré à 100°C pendant 1 heure).

En effet, le séparateur poreux orienté biaxialement doit avoir un retrait thermique suffisamment bas pour pouvoir supporter des montées en température dans la batterie lithium organique et, ainsi, éviter que la batterie soit dégradée par un échauffement non maîtrisé. Sa mise en œuvre dans le procédé de fabrication des cellules est par ailleurs facilitée.

Dans la présente invention, l'expression « orienté biaxialement » signifie que le séparateur a été obtenu par étirage dans une direction longitudinale (« *machine direction* ») et dans une direction transversale à la direction longitudinale.

Le polypropylène du séparateur poreux peut être un homopolymère du polypropylène (PP) ou un copolymère du polypropylène.

Le séparateur poreux peut comprendre en outre un matériau polymère choisi parmi le polyéthylène, un copolymère du polyéthylène et un de leurs mélanges.

Lorsque le séparateur poreux comprend d'autres matériaux polymères que du polypropylène, il comprend au moins 90% en masse de polypropylène, et de préférence au moins 95% en masse de polypropylène, par rapport à la masse totale du séparateur.

Le séparateur poreux de l'invention peut être uniquement constitué de polypropylène.

Le séparateur poreux ne contient de préférence aucune charge inorganique et/ou aucune céramique.

Le séparateur poreux ne comprend pas, de préférence, de constituant(s) qui peu(ven)t réagir avec la matière active de l'électrode positive ou ses dérivés réduits au cours du cyclage.

Le séparateur poreux peut être monocouche ou multicouche. Lorsqu'il est multicouche, il est de préférence bicouche de façon à présenter une épaisseur la plus faible possible sans toutefois nuire à ses propriétés mécaniques.

Le séparateur poreux doit posséder de bonnes propriétés de mouillabilité à l'égard de l'électrolyte utilisé de façon à ce que son imprégnation soit facile, notamment par simple mise en contact lorsque l'électrolyte est liquide, ou par co-laminage lorsque l'électrolyte est un électrolyte polymère gélifié.

Le polyéther liquide de faible masse molaire est de préférence linéaire.

Le polyéther linéaire ou cyclique liquide de faible masse molaire de l'électrolyte de la batterie de l'invention peut être choisi parmi :
* les polyéthylènes glycols de formule H-[O-CH₂-CH₂]ₘ-OH, dans laquelle m est compris entre 1 et 13,
* les éthers de glycol de formule R-[O-CH₂-CH₂]ₚ-O-R', dans laquelle p est compris entre 1 et 13 et R et R', identiques ou différents, sont des groupes alkyle linéaires, ramifiés ou cycliques, pouvant comprendre de 1 à 20 atomes de carbone,
* les éthers de formule R¹-[CH₂-O]_{q}-R^{1'}, dans laquelle q est compris entre 1 et 13, R¹ et R^{1'}, identiques ou différents, sont des groupes alkyle linéaires, ramifiés ou cycliques, pouvant comprendre de 1 à 20 atomes de carbone et éventuellement des hétéroatomes,
* les éthers cycliques pouvant comprendre de 2 à 20 atomes de carbone, les polyéthers cycliques pouvant comprendre de 3 à 40 atomes de carbone, et
* un de leurs mélanges.

Le(s) polyéther(s) utilisé(s) dans l'électrolyte de l'invention est (sont) particulièrement stable(s) vis-à-vis du lithium et des structures organiques rédox, permettant ainsi de limiter au maximum les réactions parasites.

Dans un mode de réalisation préféré, le polyéther linéaire ou cyclique liquide de faible masse molaire est le tétra éthylène glycol diméthyléther (TEGDME) de formule CH₃O-(CH₂-CH₂)₄-OCH₃ (i.e. R, R' = CH₃ et p = 4) ou le tétra éthylène glycol (TEG) de formule H-(O-CH₂-CH₂)₄-OH (i.e. m = 4).

Le sel de lithium L₁ peut être choisi parmi le fluorate de lithium (LiFO₃), le bis(trifluorométhanesulfonyl) imide de lithium (LiTFSI), l'hexafluorophosphate de lithium (LiPF₆), le fluoroborate de lithium (LiBF₄), le métaborate de lithium (LiBO₂), le perchlorate de lithium (LiClO₄), le nitrate de lithium (LiNO₃), le lithium bis(fluorosulfonyl)imide (LiFSI), le lithium bis(oxalato)borate (LiBOB ou LiB(C₂O₄)₂) et leurs mélanges.

LiTFSI est le sel de lithium L₁ préféré et il peut être éventuellement associé à du nitrate de lithium (LiNO₃).

Il va de soi que l'électrolyte de la batterie de l'invention est non-aqueux, c'est-à-dire qu'il ne comprend donc pas d'eau ou de solvants aqueux. En effet, un électrolyte aqueux n'est pas compatible avec une électrode négative en lithium métal.

L'électrolyte ne comprend pas, de préférence, de solvants organiques de type carbonate, ces derniers étant instables en présence d'une électrode au lithium à long terme et ayant tendance à conduire à la formation d'une mousse de lithium, engendrant une consommation irréversible de l'électrode négative.

Selon une première variante, l'électrolyte est un électrolyte liquide. Il imbibe alors complètement le séparateur poreux afin d'en imprégner la porosité.

Selon cette première variante, la concentration du sel de lithium L₁ dans l'électrolyte liquide va de 0,5 à 8 mol/l environ, de préférence de 1 à 5 mol/l environ, et de préférence encore de 1 à 2 mol/l environ.

L'électrolyte liquide peut être constitué par un sel de lithium L₁ en solution dans un solvant comprenant au moins un polyéther linéaire ou cyclique liquide de faible masse molaire.

L'électrolyte liquide peut être uniquement constitué d'un sel de lithium L₁ et d'un polyéther linéaire ou cyclique liquide de faible masse molaire.

L'électrolyte liquide est, de préférence, une solution comprenant 1,5 mol/l environ de LiTFSI dans du TEGDME ou dans du TEG.

Selon une deuxième variante, l'électrolyte est un électrolyte polymère gélifié, il est alors déposé sur le séparateur afin d'en imprégner la porosité et de former un film d'électrolyte sec autoporté.

Selon cette deuxième variante, l'électrolyte comprend en outre au moins un liant polymère P₂.

Le liant polymère P₂ peut avoir une masse molaire strictement supérieure à 10 000 g·mol⁻¹ environ, de préférence strictement supérieure à 50 000 g·mol⁻¹ environ, et de préférence encore strictement supérieure à 100 000 g·mol⁻¹ environ.

Le liant polymère P₂ peut être choisi parmi les homopolymères et copolymères d'éthylène ; les homopolymères et copolymères de propylène ; les homopolymères et les copolymères d'oxyde d'éthylène (e.g. POE, copolymère du POE), d'oxyde de méthylène, d'oxyde de propylène, d'épichlorhydrine, d'allylglycidyléther, et leurs mélanges ; les polymères halogénés tels que les homopolymères et les copolymères de chlorure de vinyle, de fluorure de vinylidène (PVdF), de chlorure de vinylidène, de tétrafluorure d'éthylène, ou de chlorotrifluoroéthylène, les copolymères de fluorure de vinylidène et de hexafluoropropylène (PVdF-co-HFP) ou leurs mélanges ; les polymères non conducteurs électroniques de type anionique tels que le poly(styrène sulfonate), le poly(acide acrylique), le poly(glutamate), l'alginate, la pectine, la gélatine ou leurs mélanges ; les polymères de type cationique tels que le polyéthylèneimine (PEI), la polyaniline sous forme de sel éméraldine (ES), le poly(N-vinylimidazole quaternisé), le poly(acrylamide-co-chlorure de diallyldiméthyl ammonium) (AMAC) ou leurs mélanges ; les polyacrylates ; et un de leurs mélanges.

Par copolymère, on entend dans la présente invention, un composé polymère obtenu à partir d'au moins deux monomères différents.

L'électrolyte polymère gélifié peut comprendre de 20 à 70% en masse environ de liant polymère P₂, et de préférence de 30 à 60% en masse environ de liant polymère P₂, par rapport à la masse totale de l'électrolyte polymère gélifié.

Les liants polymères P₂ préférés sont le copolymère d'oxyde d'éthylène et d'oxyde de propylène et le copolymère d'oxyde d'éthylène et d'oxyde de butylène.

L'électrolyte polymère gélifié peut comprendre de 15 à 45% en masse environ de sel de lithium L₁, et de préférence de 20 à 35% en masse environ de sel de lithium L₁ par rapport à la masse totale de l'électrolyte polymère gélifié.

L'électrolyte polymère gélifié peut comprendre de 5 à 40% en masse environ de polyéther linéaire ou cyclique liquide de faible masse molaire, et de préférence de 10 à 30% en masse environ de polyéther linéaire ou cyclique liquide de faible masse molaire, par rapport à la masse totale de l'électrolyte polymère gélifié.

La batterie conforme à l'invention peut fonctionner entre 0 et 110°C environ, et de préférence entre 20 et 100°C environ.

Dans un mode de réalisation particulier de l'invention, l'électrode positive de la batterie de l'invention comprend au moins 45% en masse environ de structure organique rédox, et de préférence au moins 60% en masse environ de structure organique rédox, par rapport à la masse totale de ladite électrode positive.

Dans la présente invention, l'expression « structure organique rédox » signifie une structure organique électroactive capable de réagir réversiblement avec le Li, c'est-à-dire une structure organique capable de mettre en œuvre une ou plusieurs réactions d'oxydoréduction réversibles, en échangeant des électrons avec une électrode et simultanément en s'associant avec des ions lithium.

La structure organique rédox représente la matière active de l'électrode positive (i.e. le matériau d'électrode positive) de la batterie lithium organique de l'invention.

Dans la présente invention, la structure organique rédox étant différente des agents soufrés choisis parmi le soufre élémentaire S₈ et les composés organiques soufrés comprenant au moins une liaison S-S, celle-ci n'est pas une matière active d'électrode positive telle que celles généralement utilisées comme matière active d'électrode positive d'une batterie lithium soufre. Les composés organiques soufrés comprenant au moins une liaison S-S peuvent être les polysulfures organiques, notamment ceux de formule générale R²-S-Sₙ-R³ dans laquelle R² et R³, identiques ou différents, représentent une chaîne alkyle linéaire, ramifiée ou cyclique, pouvant comprendre de 1 à 20 atomes de carbone, et n étant compris entre 1 et 50 ; ou les polymères disulfures présentant un enchaînement de liaisons S-S pouvant être cassées lors du cycle de décharge d'une batterie lithium soufre, et reformées lors du cycle de charge. Les composés organiques soufrés comprenant au moins une liaison S-S peuvent être également les composés de formule Li₂S_{w} dans laquelle w > 1 ou les polymères carbone-soufre de formule (C₂Sₓ₁)_{y1} dans laquelle x₁ = 2,5-50, et y₁ ≥ 2.

La structure organique rédox peut être différente de Li₂S qui correspond à l'état déchargé des composés de formule Li₂S_{w} tels que définis ci-dessus.

Selon l'invention, la structure organique rédox comprend au moins deux fonctions carbonylées C=O, deux fonctions thiones C=S ou deux fonctions imines C=N, éventuellement présentes sur au moins un noyau aromatique. Les fonctions carbonylées sont préférées.

En particulier, la structure organique rédox appartient à l'une quelconque des familles suivantes : les quinones, les anthraquinones, les benzoquinones, les naphthoquinones, les oxo-indolylidènes, les composés dérivés du squelette C₆O₆ (i.e. dérivés du rhodizonate), les composés comprenant au moins un pyracène tétracyclique, et les composés dérivés du squelette calix[4]arène.

La structure organique rédox comprenant au moins deux fonctions thiones C=S peut également être choisie parmi les équivalents soufrés de ces composés, par exemple les cyclohexadiènedithiones, les composés dérivés du squelette C₂S₂(C₆H₄)₂, les thio-indolylidènes et les dérivés du squelette C₆OₙS₆₋ₙ.

L'électrode positive peut comprendre de 1 à 30% en masse environ d'agent générant une conductivité électronique, de préférence de 2 à 20% environ en masse d'agent générant une conductivité électronique, et de préférence encore de 2 à 10% environ en masse d'agent générant une conductivité électronique, par rapport à la masse totale de l'électrode positive.

L'agent générant une conductivité électronique convenant pour la présente invention est de préférence choisi parmi le noir de carbone, le carbone SP, le noir d'acétylène, les fibres et nanofibres de carbone, les nanotubes de carbone, le graphène, le graphite, les particules et fibres métalliques et l'un de leurs mélanges.

L'agent générant une conductivité électronique est de préférence le noir de carbone.

De préférence, l'agent générant une conductivité électronique est sous forme de particules sphériques (i.e. sous forme de billes) afin de favoriser la conduction notamment dans le sens perpendiculaire à l'électrode positive (i.e. dans le sens de son épaisseur) et ainsi de favoriser les processus électrochimiques au sein de l'électrode. En effet, les particules d'agent générant une conductivité électronique sous forme sphériques ont une propension à former des réseaux conducteurs tridimensionnels.

A titre d'exemple de noir de carbone, on peut citer les noirs de carbone commercialisés sous les références : Ketjenblack 600JD®, Ketjenblack 700JD® et Timcal Ensaco 350G®.

Selon une forme de réalisation particulière, l'électrode positive comprend de 2 à 30% en masse environ de liant polymère P₁, et de préférence de 5 à 20% en masse environ de liant polymère P₁, par rapport à la masse totale de l'électrode positive.

Le liant polymère P₁ peut être choisi parmi les homopolymères et copolymères d'éthylène ; les homopolymères et copolymères de propylène ; les homopolymères et les copolymères d'oxyde d'éthylène (e.g. POE, copolymère du POE), d'oxyde de méthylène, d'oxyde de propylène, d'épichlorhydrine, d'allylglycidyléther, et leurs mélanges ; les polymères halogénés tels que les homopolymères et les copolymères de chlorure de vinyle, de fluorure de vinylidène (PVdF), de chlorure de vinylidène, de tétrafluorure d'éthylène, ou de chlorotrifluoroéthylène, les copolymères de fluorure de vinylidène et de hexafluoropropylène (PVdF-co-HFP) ou leurs mélanges ; les polyacrylates tels que le polyméthacrylate de méthyle ; les polyalcools tels que l'alcool polyvinylique (PVA) ; les polymères conducteurs électroniques tels que la polyaniline, le polypyrrole, les polyfluorènes, les polypyrènes, les polyazulènes, les polynaphtalènes, les polyacétylènes, le poly(p-phénylène-vinylène), les polycarbazoles, les polyindoles, les polyazépines, les polythiophènes, le polysulfure de p-phénylène ou leurs mélanges ; les polymères de type cationique tels que le polyéthylèneimine (PEI), la polyaniline sous forme de sel éméraldine (ES), le poly(N-vinylimidazole quaternisé), le poly(acrylamide-co-chlorure de diallyldiméthyl ammonium) (AMAC) ou leurs mélanges ; les polymères de type anionique tels que le poly(styrène sulfonate), la gélatine ou la pectine ; et un de leurs mélanges.

Le liant polymère P₁ est de préférence le PVDF-co-HFP, le PVA, le PEI, l'AMAC ou un de leurs mélanges.

L'électrode positive peut comprendre en outre au moins un polyéther linéaire ou cyclique liquide de faible masse molaire tel que défini dans la présente invention.

L'électrode positive peut comprendre de 2 à 30% en masse environ de polyéther linéaire ou cyclique liquide de faible masse molaire, et de préférence de 5 à 20% en masse environ de polyéther linéaire ou cyclique liquide de faible masse molaire, par rapport à la masse totale de l'électrode positive.

L'électrode positive peut comprendre en outre au moins un sel de lithium L₂.

L'électrode positive peut comprendre de 1 à 25% en masse environ de sel de lithium L₂, de préférence de 1 à 15% en masse environ de sel de lithium L₂, et de préférence encore de 1 à 10% en masse environ de sel de lithium L₂, par rapport à la masse totale de l'électrode positive.

Le sel de lithium L₂ peut être choisi parmi le fluorate de lithium (LiFO₃), le bis(trifluorométhanesulfonyl) imide de lithium (LiTFSI), l'hexafluorophosphate de lithium (LiPF₆), le fluoroborate de lithium (LiBF₄), le métaborate de lithium (LiBO₂), le perchlorate de lithium (LiClO₄), le nitrate de lithium (LiNO₃), le lithium bis(fluorosulfonyl)imide (LiFSI), le lithium bis(oxalatoborate) (LiBOB ou LiB(C₂O₄)₂) et leurs mélanges.

LiTFSI est le sel de lithium L₂ préféré.

L'électrode positive de l'invention peut présenter une porosité inférieure ou égale à 40% en volume environ, et de préférence inférieure ou égale à 30% en volume environ, par rapport au volume total de l'électrode. Cela permet ainsi d'améliorer la densité d'énergie de la batterie.

Il convient de noter que la masse totale de l'électrode positive comprend la masse de la structure organique rédox, la masse du liant polymère P₁, la masse de l'agent générant une conductivité électronique, éventuellement la masse du polyéther linéaire ou cyclique liquide de faible masse molaire s'il est présent et éventuellement la masse du sel de lithium L₂ s'il est présent.

L'électrode positive peut être préparée :
a) en mélangeant au moins une structure organique rédox avec au moins un agent générant une conductivité électronique, au moins un liant polymère P₁, éventuellement au moins un sel de lithium L₂, éventuellement au moins un polyéther linéaire ou cyclique liquide de faible masse molaire, et éventuellement au moins un solvant dudit liant polymère P₁, pour obtenir une pâte d'électrode,
b) en appliquant ladite pâte d'électrode sur au moins un support,
c) en séchant ladite pâte d'électrode pour obtenir une électrode positive sous forme de film supporté.

Le liant polymère P₁, le sel de lithium L₂ et le polyéther linéaire ou cyclique liquide de faible masse molaire sont tels que définis dans la présente invention.

L'étape a) peut être réalisée par extrusion ou par broyage.

L'extrusion est très avantageuse puisqu'elle permet d'obtenir facilement des électrodes peu poreuses tout en utilisant peu de solvant. Elle permet également d'éviter une étape de calandrage sur l'électrode sèche qui peut engendrer des modifications de structure de l'électrode, nuire au bon enrobage des grains de l'agent générant une conductivité électronique et ainsi peut induire un effondrement de l'électrode au cours du cyclage. Enfin, l'étape de calandrage présente l'inconvénient d'augmenter le nombre d'étapes pour obtenir l'électrode et ainsi son coût de production.

Le solvant du liant polymère P₁ de l'étape a) permet de solubiliser ledit liant polymère P₁.

Lorsqu'il est présent, ledit solvant représente de préférence moins de 30% en masse environ de la masse totale du mélange de la structure organique rédox, d'agent générant une conductivité électronique, de liant polymère P₁, éventuellement de sel de lithium L₂ et éventuellement de polyéther linéaire ou cyclique liquide de faible masse molaire.

L'utilisation lors de la fabrication de l'électrode positive d'une faible quantité de solvant du liant polymère P₁ permet de conduire à une électrode positive de faible porosité (i.e. ≤ 40% en volume environ). Cette faible porosité permet de contrôler et d'optimiser la quantité de structure organique rédox présente dans l'électrode positive, et ainsi de parvenir à des densités volumiques d'énergie optimales.

Le solvant de l'étape a) peut être choisi parmi l'eau, la *N*-méthylpyrrolidone, les solvants de type carbonate tels que le carbonate d'éthylène, le carbonate de propylène, le carbonate de diméthyle, le carbonate de diéthyle ou le carbonate de méthyle et d'éthyle, l'acétone, les alcools tels que le méthanol, l'éthanol ou le propanol, et leurs mélanges.

Le solvant est de préférence choisi parmi l'eau, l'acétone, les alcools, et leurs mélanges.

L'étape b) peut être réalisée par laminage ou par enduction.

Le support peut être un collecteur de courant et/ou un film de support.

À titre d'exemple de collecteur de courant, on peut citer un collecteur de courant en aluminium recouvert d'une couche à base de carbone (couche anticorrosion).

À titre d'exemple de film de support, on peut citer un film plastique de type polyéthylène téréphtalate (PET) siliconé.

Le film supporté d'électrode positive obtenu à l'issue de l'étape c) peut avoir une épaisseur allant de 2 à 100 µm environ, et de préférence de 10 à 60 µm environ.

L'étape c) peut être réalisée à une température suffisante pour permettre d'éliminer le solvant de l'étape a).

L'invention a pour deuxième objet un procédé de fabrication d'une batterie lithium organique telle que définie dans le premier objet de l'invention, caractérisé en ce qu'il comprend les étapes suivantes :
A) une étape de préparation d'un électrolyte liquide ou d'un électrolyte polymère gélifié tel que défini dans la présente invention, notamment par mélange d'au moins un polyéther linéaire ou cyclique liquide de faible masse molaire avec au moins un sel de lithium L₁,
B) une étape d'assemblage d'une électrode positive, d'une électrode négative et d'un séparateur poreux tels que définis dans la présente invention,
   ledit procédé comprenant en outre l'une ou l'autre des étapes suivantes :
   C-1) une étape d'imprégnation de l'assemblage tel qu'obtenu à l'étape B) par l'électrolyte liquide préparé à l'étape A), ou
   C-2) une étape d'imprégnation du séparateur poreux par l'électrolyte polymère gélifié préparé à l'étape A), ladite imprégnation étant préalable à l'étape B) d'assemblage.

Le polyéther linéaire ou cyclique liquide de faible masse molaire, le sel de lithium L₁ et le liant polymère P₂ sont tels que définis dans le premier objet de l'invention.

L'électrolyte liquide de l'étape A) est de préférence préparé en dissolvant sous agitation au moins un sel de lithium L₁ dans un polyéther linéaire ou cyclique liquide de faible masse molaire, éventuellement à une température allant de 20 à 120°C environ.

L'électrolyte polymère gélifié de l'étape A) peut être obtenu par extrusion d'au moins un liant polymère P₂ avec une solution comprenant au moins un polyéther linéaire ou cyclique liquide de faible masse molaire et au moins un sel de lithium L₁ pour obtenir une pâte d'électrolyte, puis par laminage de la pâte d'électrolyte, notamment entre deux films de support pour obtenir un film d'électrolyte polymère gélifié.

L'extrusion peut être réalisée à une température allant de 60 à 170°C environ.

Les deux films de support peuvent être des films plastiques de PET siliconés.

L'imprégnation du séparateur par l'électrolyte polymère gélifié (cf. étape C-2)) peut être effectuée par co-laminage du séparateur et du film d'électrolyte polymère gélifié, notamment à une température de 80°C environ, et de préférence à une pression de 5 bars environ.

Les étapes A) et C-2) peuvent être une seule et même étape au cours de laquelle la pâte d'électrolyte obtenue par extrusion est laminée directement sur le séparateur pour obtenir un séparateur imprégné d'un électrolyte polymère gélifié.

La présente invention est illustrée par les exemples ci-après, auxquels elle n'est cependant pas limitée.

### EXEMPLES

Les matières premières utilisées dans les exemples sont listées ci-après :
- noir de carbone « Ketjenblack 600JD® », AkzoNobel,
- anthraquinone de pureté 97%, Sigma Aldrich,
- polyéthylèneimine (PEI), à 50% en masse dans l'eau, Fluka, Sigma Aldrich,
- LiTFSI, 3M,
- Film de PET siliconé, Mitsubishi,
- Tétra éthylène glycol diméthyléther (TEGDME), de pureté 99%, Sigma Aldrich,
- copolymère du POE (co-POE), Mw ∼ 10⁵ g.mol⁻¹, « ZSN 8100 », Zeospan,
- séparateur monocouche orienté biaxialement en polypropylène **S-1,** BPF220, Bolloré,
- séparateur monocouche en polypropylène **S-2,** Celgard 2500.

Sauf indications contraires, tous les matériaux ont été utilisés tels que reçus des fabricants.

### EXEMPLE 1

### Fabrication d'une batterie lithium organique conforme à l'invention

### 1.1 Préparation de l'électrode positive

On a mélangé manuellement 2,25 g de noir de carbone Ketjenblack avec 31,5 g d'anthraquinone à température ambiante.

Le mélange préparé ci-dessus a ensuite été mélangé à 80°C pendant 20 minutes avec 5,085 g de tétra éthylène glycol diméthyl éther (TEGDME), 9 g de solution à 50% de polyéthylèneimine (PEI), 1,665 g de sel de lithium (LiTFSI) et 5 g d'eau dans un mélangeur vendu sous la dénomination commerciale Plastograph® EC par la société Brabender®. La quantité d'eau utilisée représentait 20% en masse environ de la masse totale du noir de carbone, de l'anthraquinone, du polyéthylèneimine PEI et du sel de lithium LiTFSI.

La pâte ainsi obtenue a ensuite été laminée à 95°C sur un collecteur de courant en aluminium recouvert d'une couche à base de carbone.

Le film ainsi obtenu a été séché à 120°C pendant 20 minutes dans une étuve pour obtenir une électrode positive **E-1** sous forme de film conforme à l'invention.

Le tableau 1 ci-dessous présente la composition massique de l'électrode positive **E-1** obtenue :

**TABLEAU 1**

| **Electrode positive** | **Noir de carbone (%)** | **TEGDME (%)** | **Sel de lithium (%)** | **PEI (%)** | **Anthraquinone (%)** |
|---|---|---|---|---|---|
| **E-1** | 5 | 11,3 | 3,7 | 10 | 70 |

### 1.2 Préparation d'un électrolyte liquide et caractéristiques des séparateurs utilisés

Un électrolyte liquide constitué par du LiTFSI dans du tétra éthylène glycol diméthyléther (TEGDME) et comprenant 30,1% en masse de LITFSI a été préparé. Une solution à 1,51 mol/l de sel de lithium dans du TEGDME a été ainsi obtenue.

Le tableau 2 ci-dessous présente les caractéristiques des séparateurs **S-1** et **S-2** utilisés dans le présent exemple : l'épaisseur e (en µm), la porosité P (en %), la porosité de type Gurley P_{Gurley} (en s/100 cm³), le retrait thermique longitudinal mesuré à 100°C pendant 1 heure R_{L} (en %), le retrait thermique transversal mesuré à 100°C pendant 1 heure R_{T} (en %), la résistance maximale à la perforation Fₘₐₓ (en Newton N), et l'allongement à la rupture A (en mm).

La porosité de type Gurley P_{Gurley} est mesurée à l'aide d'un densimètre automatique vendu sous la dénomination commerciale Guenine Gurley Modèle 4340.

La porosité P est calculée en comparant l'épaisseur réelle du séparateur et son épaisseur théorique estimée à partir de sa masse et de la densité du polypropylène.

Les retraits thermiques longitudinal R_{L} et transversal R_{T} ont été estimés selon la norme ISO11501 (données obtenues auprès des fournisseurs de séparateurs).

La résistance à la perforation maximale Fₘₐₓ et l'allongement à la rupture A ont été obtenus à l'aide de tests de perforation ASTM D3420 réalisés à température ambiante à l'aide d'un dynamomètre vendu sous la dénomination commerciale Adamel-Lhomargy de type DY32.

**TABLEAU 2**

| **Séparateur** | **e (µm)** | **P (%)** | **P_{Gurley} (s/100 cm³)** | **R_{L} (%)** | **R_{T} (%)** | **Fₘₐₓ (N)** | **A (mm)** |
|---|---|---|---|---|---|---|---|
| **S-1** | 15 | >50 | 95 | 2 | 6,5 | 41 | 17 |
| **S-2** | 25 | 55 | 180 | 5^{a} | 0^{a} | 63 | 30,1 |

| | | | | | | | |
|---|---|---|---|---|---|---|---|
| ^{a} : retraits thermiques mesures à 90°C au lieu de 100°C. | | | | | | | |

### 1.3 Préparation d'un électrolyte polymère solide

L'électrolyte polymère solide a été préparé par extrusion d'un mélange de sel de lithium (LiTFSI), de copolymère du POE Zeospan® et de PVDF-co-HFP, puis par laminage de la pâte d'électrolyte obtenue à 125°C entre deux films plastiques de PET siliconés.

Le tableau 3 ci-dessous présente la composition massique de l'électrolyte polymère solide obtenu :

**TABLEAU 3**

| **Electrolyte Polymère solide** | **TEGDME (%)** | **Sel de lithium (%)** | **Co-POE (%)** | **PVdF-co-HFP (%)** |
|---|---|---|---|---|
| **PS-1** | 0 | 12 | 48 | 40 |

### 1.4 Fabrication de batteries lithium organique

Trois batteries **B-1, B-2** et **B-3** ont été préparées en assemblant sous atmosphère anhydre (air avec un point de rosée < -40°C) par laminage manuel à température ambiante :
- l'électrode positive **E-1** obtenue dans l'exemple 1.1 ci-dessus,
- une électrode négative comprenant du lithium métal sous forme d'un film de lithium métal de 100 µm d'épaisseur environ, et
- le séparateur **S-1** imprégné de l'électrolyte liquide obtenu dans l'exemple 1.2 ci-dessus, ou le séparateur **S-2** imprégné de l'électrolyte liquide obtenu dans l'exemple 1.2 ci-dessus, ou l'électrolyte polymère solide **PS-1** obtenu dans l'exemple 1.3 ci-dessus.

La batterie **B-1** est conforme à l'invention puisqu'elle comprend une électrode positive, une électrode négative, un électrolyte et un séparateur tels que définis dans la présente invention.

En revanche, les batteries **B-2** et **B-3** ne sont pas conformes à l'invention puisque **B-2** ne comprend pas un séparateur tel que défini dans la présente invention et **B-3** ne comprend pas de séparateur et d'électrolyte tels que définis dans la présente invention.

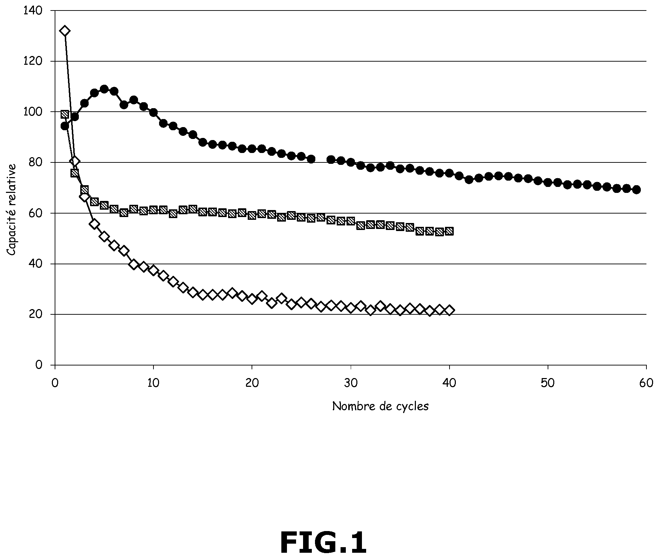

La capacité spécifique (en mAh/g) de la batterie **B-1** (courbe avec les ronds pleins), de la batterie **B-2** (courbe avec les carrés pleins), et de la batterie **B-3** (courbe avec les losanges vides) en fonction du nombre de cycles à un régime de courant de C/4 et à une température de 100°C est reportée sur la figure 1.

Ces résultats montrent que l'utilisation d'un séparateur biaxialement orienté tel que défini dans la présente invention permet d'améliorer significativement la résistance au cyclage de la batterie lithium organique. En particulier, la figure 1 montre pour la batterie **B-3** (électrolyte polymère solide) une chute très rapide de la capacité de décharge au cours des premiers cycles et l'absence de stabilisation dans les cycles ultérieurs, probablement liées à une dissolution de l'anthraquinone dans l'électrolyte polymère solide et ainsi, sa diffusion. De la même manière, la figure 1 montre pour la batterie **B-2** (séparateur uniaxialement orienté) une chute très rapide de la capacité de décharge au cours des premiers cycles.

## Revendications

1. Batterie lithium organique comprenant :
- une électrode négative comprenant du lithium métal ou un alliage de lithium métal,
- une électrode positive éventuellement supportée par un collecteur de courant, ladite électrode positive comprenant au moins une structure organique rédox, au moins un liant polymère P₁ et au moins un agent générant une conductivité électronique, ladite structure organique rédox étant différente des agents soufrés choisis parmi le soufre élémentaire S₈ et les composés organiques soufrés comprenant au moins une liaison S-S, ladite structure organique rédox comprenant au moins deux fonctions carbonylées C= O, deux fonctions thiones C= S ou deux fonctions imines C= N, et
- un séparateur poreux imprégné d'un électrolyte,
ladite batterie lithium organique étant **caractérisée en ce que** le séparateur poreux est un séparateur orienté biaxialement comprenant au moins du polypropylène et l'électrolyte comprend au moins un polyéther linéaire ou cyclique liquide de masse molaire inférieure ou égale à 10 000 g·mol⁻¹ et au moins un sel de lithium L₁.

2. Batterie selon la revendication 1, **caractérisée en ce que** le séparateur poreux présente une épaisseur allant de 5 µm à 50 µm.

3. Batterie selon l'une quelconque des revendications précédentes, **caractérisée en ce que** le séparateur poreux présente une porosité supérieure ou égale à 50% en volume.

4. Batterie selon l'une quelconque des revendications précédentes, **caractérisée en ce que** le séparateur poreux présente des pores de taille moyenne allant de 50 nm à 3 µm.

5. Batterie selon l'une quelconque des revendications précédentes, **caractérisée en ce que** le séparateur poreux présente un allongement à la rupture d'au moins 5 mm.

6. Batterie selon l'une quelconque des revendications précédentes, **caractérisée en ce que** le séparateur poreux présente une porosité de type Gurley allant de 50 à 500 s/100 cm³.

7. Batterie selon l'une quelconque des revendications précédentes, **caractérisée en ce que** le séparateur poreux présente un retrait thermique dans le sens longitudinal et/ou un retrait thermique dans le sens transversal strictement inférieur à 15%, quelle que soit son épaisseur.

8. Batterie selon l'une quelconque des revendications précédentes, **caractérisée en ce que** le sel de lithium L₁ est choisi parmi le fluorate de lithium (LiFO₃), le bis(trifluorométhanesulfonyl) imide de lithium (LiTFSI), l'hexafluorophosphate de lithium (LiPF₆), le fluoroborate de lithium (LiBF₄), le métaborate de lithium (LiBO₂), le perchlorate de lithium (LiClO₄), le nitrate de lithium (LiNO₃), le lithium bis(fluorosulfonyl)imide (LiFSI), le lithium bis(oxalato borate) (LiBOB ou LiB(C₂O₄)₂) et leurs mélanges.

9. Batterie selon l'une quelconque des revendications précédentes, **caractérisée en ce que** l'électrolyte est un électrolyte polymère gélifié et il comprend en outre au moins un liant polymère P₂.

10. Batterie selon la revendication 9, **caractérisée en ce que** le liant polymère P₂ est choisi parmi les homopolymères et copolymères d'éthylène ; les homopolymères et copolymères de propylène ; les homopolymères et les copolymères d'oxyde d'éthylène, d'oxyde de méthylène, d'oxyde de propylène, d'épichlorhydrine, d'allylglycidyléther, et leurs mélanges ; les polymères halogénés ; les polymères non conducteurs électroniques de type anionique ; les polyacrylates ; les polymères de type cationique ; et un de leurs mélanges.

11. Batterie selon la revendication 9 ou 10, **caractérisée en ce que** l'électrolyte polymère gélifié comprend de 20 à 70% en masse de liant polymère P₂ par rapport à la masse totale de l'électrolyte polymère gélifié.

12. Batterie selon l'une quelconque des revendications 9 à 11, **caractérisée en ce que** l'électrolyte polymère gélifié comprend de 15 à 45% en masse de sel de lithium L₁ par rapport à la masse totale de l'électrolyte polymère gélifié.

13. Batterie selon l'une quelconque des revendications 9 à 12, **caractérisée en ce que** l'électrolyte polymère gélifié comprend de 5 à 40% en masse de polyéther linéaire ou cyclique liquide de faible masse molaire par rapport à la masse totale de l'électrolyte polymère gélifié.

14. Batterie selon l'une quelconque des revendications 1 à 8, **caractérisée en ce que** l'électrolyte est un électrolyte liquide et la concentration du sel de lithium L₁ dans l'électrolyte liquide va de 0,5 à 8 mol/l.

15. Batterie selon l'une quelconque des revendications précédentes, **caractérisée en ce que** l'électrode positive de la batterie de l'invention comprend au moins 45% en masse de structure organique rédox, par rapport à la masse totale de ladite électrode positive.

16. Batterie selon l'une quelconque des revendications précédentes, **caractérisée en ce que** l'électrode positive comprend de 1 à 30% en masse d'agent générant une conductivité électronique par rapport à la masse totale de l'électrode positive.

17. Batterie selon l'une quelconque des revendications précédentes, **caractérisée en ce que** l'agent générant une conductivité électronique est choisi parmi le noir de carbone, le carbone SP, le noir d'acétylène, les fibres et nanofibres de carbone, les nanotubes de carbone, le graphène, le graphite, les particules et fibres métalliques et l'un de leurs mélanges.

18. Batterie selon l'une quelconque des revendications précédentes, **caractérisée en ce que** l'électrode positive comprend de 2 à 30% en masse de liant polymère P₁ par rapport à la masse totale de l'électrode positive.

19. Batterie selon l'une quelconque des revendications précédentes, **caractérisée en ce que** le liant polymère P₁ est choisi parmi les homopolymères et copolymères d'éthylène ; les homopolymères et copolymères de propylène ; les homopolymères et les copolymères d'oxyde d'éthylène, d'oxyde de méthylène, d'oxyde de propylène, d'épichlorhydrine, d'allylglycidyléther, et leurs mélanges ; les polymères halogénés ; les polyacrylates ; les polyalcools ; les polymères conducteurs électroniques ; les polymères de type cationique ; les polymères de type anionique ; et un de leurs mélanges.

20. Procédé de fabrication d'une batterie lithium organique telle que définie dans l'une quelconque des revendications 1 à 19, **caractérisé en ce qu'**il comprend les étapes suivantes :
A) une étape de préparation d'un électrolyte liquide ou d'un électrolyte polymère gélifié tel que défini dans l'une quelconque des revendications 1 à 19,
B) une étape d'assemblage d'une électrode positive, d'une électrode négative et d'un séparateur poreux tels que définis dans l'une quelconque des revendications 1 à 19,
ledit procédé comprenant en outre l'une ou l'autre des étapes suivantes :
C-1) une étape d'imprégnation de l'assemblage tel qu'obtenu à l'étape B) par l'électrolyte liquide préparé à l'étape A), ou
C-2) une étape d'imprégnation du séparateur poreux par l'électrolyte polymère gélifié préparé à l'étape A), ladite imprégnation étant préalable à l'étape B) d'assemblage.

## Patentansprüche

1. Organische Lithiumbatterie, umfassend:
- eine negative Elektrode, umfassend Lithiummetall oder eine Lithiummetallegierung,
- eine positive Elektrode, eventuell getragen von einem Stromkollektor, wobei die positive Elektrode mindestens eine organische Redoxstruktur umfasst, mindestens ein Polymerbindemittel P₁ und mindestens ein Mittel, das eine elektronische Leitfähigkeit erzeugt, wobei die organische Redoxstruktur verschieden von den geschwefelten Mitteln ist, ausgewählt aus dem elementaren Schwefel S₈ und den geschwefelten organischen Verbindungen, umfassend mindestens eine Bindung S-S, wobei die organische Redoxstruktur mindestens zwei carbonylierte Funktionen 0=0 umfasst, zwei Thionfunktionen C= S oder zwei Iminfunktionen C= N, und
- einen porösen Separator, der mit einem Elektrolyt imprägniert ist,
wobei die organische Lithiumbatterie **dadurch gekennzeichnet ist, dass** der poröse Separator ein Separator ist, der biaxial ausgerichtet ist, umfassend mindestens Polypropylen, und der Elektrolyt mindestens einen linearen Polyether oder eine cyclische Flüssigkeit mit einer Molmasse von weniger als oder gleich 10 000 g•mol⁻¹ und mindestens einem Lithiumsalz L₁ umfasst.

2. Batterie nach Anspruch 1, **dadurch gekennzeichnet, dass** der poröse Separator eine Dicke im Bereich von 5 µm bis 50 µm aufweist.

3. Batterie nach einem der vorhergehenden Ansprüche, **dadurch gekennzeichnet, dass** der poröse Separator eine Porosität von mehr als oder gleich 50 Vol.% aufweist.

4. Batterie nach einem der vorhergehenden Ansprüche, **dadurch gekennzeichnet, dass** der poröse Separator Poren mit einer mittleren Größe im Bereich von 50 nm bis 3 µm aufweist.

5. Batterie nach einem der vorhergehenden Ansprüche, **dadurch gekennzeichnet, dass** der poröse Separator eine Bruchdehnung von mindestens 5 mm aufweist.

6. Batterie nach einem der vorhergehenden Ansprüche, **dadurch gekennzeichnet, dass** der poröse Separator eine Porosität vom Typ Gurley im Bereich von 50 bis 500 s/100 cm³ aufweist.

7. Batterie nach einem der vorhergehenden Ansprüche, **dadurch gekennzeichnet, dass** der poröse Separator eine Wärmeschrumpfung in der Längsrichtung und/oder eine Wärmeschrumpfung in der Querrichtung strikt unterhalb von 15 % aufweist, unabhängig von seiner Dicke.

8. Batterie nach einem der vorhergehenden Ansprüche, **dadurch gekennzeichnet, dass** das Lithiumsalz L₁ ausgewählt ist aus Lithiumfluorat (LiFO₃), Lithiumbis(trifluormethansulfonyl)imid (LiTFSI), Lithiumhexafluorphosphat (LiPF₆), Lithiumfluorborat (LiBF₄), Lithiummetaborat (LiBO₂), Lithiumperchlorat (LiClO₄), Lithiumnitrat (LiNO₃), Lithiumbis(fluorsulfonyl)imid (LiFSI), Lithiumbis(oxalatborat) (LiBOB oder LiB(C₂O₄)₂) und ihren Mischungen.

9. Batterie nach einem der vorhergehenden Ansprüche, **dadurch gekennzeichnet, dass** der Elektrolyt ein gelierter Polymerelektrolyt ist und er außerdem mindestens ein Polymerbindemittel P₂ umfasst.

10. Batterie nach Anspruch 9, **dadurch gekennzeichnet, dass** das Polymerbindemittel P₂ ausgewählt ist aus den Ethylenhomopolymeren und -copolymeren; den Propylenhomopolymeren und -copolymeren; den Ethylenoxyd-, Methylenoxyd-, Propylenoxid-, Epichlorhydrin-, Allylglycidyletherhomopolymeren und -copolymeren und ihren Mischungen; den halogenierten Polymeren; den nicht elektronisch leitenden Polymeren der anionischen Art; den Polyacrylaten; den Polymeren der kationischen Art; und einer ihrer Mischungen.

11. Batterie nach Anspruch 9 oder 10, **dadurch gekennzeichnet, dass** der gelierte Polymerelektrolyt von 20 bis 70 Massenprozent Polymerbindemittel P₂ mit Bezug auf die Gesamtmasse des gelierten Polymerelektrolyts umfasst.

12. Batterie nach einem der Ansprüche 9 bis 11, **dadurch gekennzeichnet, dass** der gelierte Polymerelektrolyt 15 bis 45 Massenprozent Lithiumsalz L₁ mit Bezug auf die Gesamtmasse des gelierten Polymerelektrolyts umfasst.

13. Batterie nach einem der Ansprüche 9 bis 12, **dadurch gekennzeichnet, dass** der gelierte Polymerelektrolyt 5 bis 40 Massenprozent linearen Polyether oder cyclische Flüssigkeit mit geringer Molmasse mit Bezug auf die Gesamtmasse des gelierten Polymerelektrolyts umfasst.

14. Batterie nach einem der Ansprüche 1 bis 8, **dadurch gekennzeichnet, dass** der Elektrolyt ein flüssiger Elektrolyt ist und die Konzentration des Lithiumsalzes L₁ im flüssigen Elektrolyt im Bereich von 0,5 bis 8 mol/l liegt.

15. Batterie nach einem der vorhergehenden Ansprüche, **dadurch gekennzeichnet, dass** die positive Elektrode der Batterie der Erfindung mindestens 45 Massenprozent organische Redoxstruktur mit Bezug auf die Gesamtmasse der positiven Elektrode umfasst.

16. Batterie nach einem der vorhergehenden Ansprüche, **dadurch gekennzeichnet, dass** die positive Elektrode von 1 bis 30 Massenprozent des Mittels umfasst, das eine elektronische Leitfähigkeit mit Bezug auf die Gesamtmasse der positiven Elektrode erzeugt.

17. Batterie nach einem der vorhergehenden Ansprüche, **dadurch gekennzeichnet, dass** das Mittel, das eine elektronische Leitfähigkeit erzeugt, ausgewählt ist aus Ruß, SP-Kohlenstoff, Acetylenruß, Kohlenstofffasern und -nanofasern, Kohlenstoffnanoröhrchen, Graphen, Graphit, Metallpartikel- und Fasern und eine ihrer Mischungen.

18. Batterie nach einem der vorhergehenden Ansprüche, **dadurch gekennzeichnet, dass** die positive Elektrode von 2 bis 30 Massenprozent Polymerbindemittel P₁ mit Bezug auf die Gesamtmasse der positiven Elektrode umfasst.

19. Batterie nach einem der vorhergehenden Ansprüche, **dadurch gekennzeichnet, dass** das Polymerbindemittel P₁ ausgewählt ist aus den Ethylenhomopolymeren und - copolymeren; den Propylenhomopolymeren und -copolymeren; den Ethylenoxyd-,Methylenoxyd-, Propylenoxid-, Epichlorhydrin-, Allylglycidyletherhomopolymeren und - copolymeren und ihren Mischungen; den halogenierten Polymeren; Polyacrylaten; Polyalkoholen; den elektronisch leitenden Polymeren; den Polymeren der kationischen Art; den Polymeren der anionischen Art; und einer ihrer Mischungen.

20. Verfahren zur Herstellung einer organischen Lithiumbatterie, wie in einem der Ansprüche 1 bis 19 definiert, **dadurch gekennzeichnet, dass** es die folgenden Schritte umfasst:
A) einen Schritt des Herstellens eines flüssigen Elektrolyts oder eines gelierten Polymerelektrolyts wie in einem der Ansprüche 1 bis 19 definiert,
B) einen Schritt des Montierens einer positiven Elektrode, einer negativen Elektrode und eines porösen Separators, wie in einem der Ansprüche 1 bis 19 definiert,
wobei das Verfahren außerdem den einen oder den anderen der folgenden Schritte umfasst:
C-1) einen Schritt des Imprägnierens der Montage, wie in Schritt B) erhalten, durch den flüssigen Elektrolyt, hergestellt in Schritt A), oder
C-2) einen Schritt des Imprägnierens des porösen Separators durch den gelierten Polymerelektrolyt, hergestellt in Schritt A), wobei das Imprägnieren vor dem Schritt B) des Montierens erfolgt.

## Claims

1. Organic lithium battery comprising:
- a negative electrode comprising lithium metal or a lithium metal alloy,
- a positive electrode optionally supported by a current collector, said positive electrode comprising at least one organic redox structure, at least one polymer binder P₁ and at least one agent generating electronic conductivity, said organic redox structure differing from sulfur-containing agents selected from among elementary sulfur S₈ and organic sulfur-containing compounds comprising at least one S-S bond, said organic redox structure comprising at least two C= O carbonyl functions, two C= S thionic functions or two C= N imine functions, and
- a porous separator impregnated with an electrolyte,
said organic lithium battery being **characterized in that** the porous separator is a biaxially oriented separator comprising at least polypropylene, and the electrolyte comprises at least one linear or cyclic liquid polyether having a molecular weight lower than or equal to 10 000 g/mol⁻¹, and at least one lithium salt L₁.

2. The battery according to claim 1, **characterized in that** the thickness of the porous separator ranges from 5 µm to 50 µm.

3. The battery according to any of the preceding claims, **characterized in that** the porous separator has porosity greater than or equal to 50 volume %.

4. The battery according to any of the preceding claims, **characterized in that** the average size of the pores of the porous separator ranges from 50 nm to 3 µm.

5. The battery according to any of the preceding claims, **characterized in that** the porous separator has elongation at break of at least 5 mm.

6. The battery according to any of the preceding claims, **characterized in that** the porous separator has porosity of Gurley type ranging from 50 to 500 s/100 cm³.

7. The battery according to any of the preceding claims, **characterized in that** the porous separator has thermal shrinkage in the longitudinal direction and/or thermal shrinkage in the transverse direction that is strictly lower than 15 %, irrespective of the thickness thereof.

8. The battery according to any of the preceding claims, **characterized in that** the lithium salt L₁ is selected from among lithium fluorate (LiFO₃), lithium bis(trifluoromethanesulfonyl)imide (LiTFSI), lithium hexafluorophosphate (LiPF₆), lithium fluoroborate (LiBF₄), lithium metaborate (LiBO₂), lithium perchlorate (LiClO₄), lithium nitrate (LiNO₃), lithium bis(fluorosulfonyl)imide (LiFSI), lithium bis(oxalato)borate (LiBOB or LiB(C₂O₄)₂), and mixtures thereof.

9. The battery according to any of the preceding claims, **characterized in that** the electrolyte is a gelled polymer electrolyte and also comprises at least one polymer binder P₂.

10. The battery according to claim 9, **characterized in that** the polymer binder P₂ is selected from among ethylene homopolymers and copolymers; propylene homopolymers and copolymers; homopolymers and copolymers of ethylene oxide, methylene oxide, propylene oxide, epichlorohydrin, allyl glycidyl ether, and mixtures thereof; halogenated polymers; non-electronically conductive polymers of anionic type; polyacrylates; polymers of cationic type; and one of the mixtures thereof.

11. The battery according to claim 9 or 10, **characterized in that** the gelled polymer electrolyte comprises from 20 to 70 weight % of polymer binder P₂ relative to the total weight of the gelled polymer electrolyte.

12. The battery according to any of claims 9 to 11, **characterized in that** the gelled polymer electrolyte comprises from 15 to 45 weight % of lithium salt L₁ relative to the total weight of the gelled polymer electrolyte.

13. The battery according to any of claims 9 to 12, **characterized in that** the gelled polymer electrolyte comprises from 5 to 40 weight % of linear or cyclic liquid polyether of low molecular weight, relative to the total weight of the gelled polymer electrolyte.

14. The battery according to any of claims 1 to 8, **characterized in that** the electrolyte is a liquid electrolyte and the concentration of lithium salt L₁ in the liquid electrolyte ranges from 0.5 to 8 mol/l.

15. The battery according to any of the preceding claims, **characterized in that** the positive electrode of the battery of the invention comprises at least 45 weight % of organic redox structure relative to the total weight of said positive electrode.

16. The battery according to any of the preceding claims, **characterized in that** the positive electrode comprises from 1 to 30 weight % of agent generating electronic conductivity relative to the total weight of the positive electrode.

17. The battery according to any of the preceding claims, **characterized in that** the agent generating electronic conductivity is selected from among carbon black, sp carbon, acetylene black, carbon fibres and nanofibers, carbon nanotubes, graphene, graphite, metal particles and fibres, and one of the mixtures thereof.

18. The battery according to any of the preceding claims, **characterized in that** the positive electrode comprises from 2 to 30 weight % of polymer binder P₁ relative to the total weight of the positive electrode.

19. The battery according to any of the preceding claims, **characterized in that** the polymer binder P1 is selected from among ethylene homopolymers and copolymers; propylene homopolymers and copolymers; homopolymers and copolymers of ethylene oxide, methylene oxide, propylene oxide, epichlorohydrin, allyl glycidyl ether, and the mixtures thereof; halogenated polymers; polyacrylates; polyalcohols; electronically conductive polymers; polymers of cationic type; polymers of anionic type; and one of the mixtures thereof.

20. Method for fabricating an organic lithium battery such as defined in any of claims 1 to 19, **characterized in that** it comprises the following steps:
A) a step to prepare a liquid electrolyte or gelled polymer electrolyte such as defined in any of claims 1 to 19;
B) a step to assemble a positive electrode, a negative electrode and a porous separator such as defined in any of claims 1 to 19;
said method further comprising one or other of the following steps:
C-1) a step to impregnate the assembly such as obtained at step B) with the liquid electrolyte prepared at step A); or
C-2) a step to impregnate the porous separator with the gelled polymer electrolyte prepared at step A), said impregnation being performed prior to assembly step B).
